# EUROPEAN PATENT SPECIFICATION

(11) **EP 1 559 099 B1**
(45) Date of publication and mention of the grant of the patent: **30.06.2010**
(21) Application number: 03759087.4
(22) Date of filing: 28.10.2003
(51) Int. Cl.: G11B 7/26

(54) **MASTER PLATE FOR FABRICATING A STAMPER PLATE, STAMPER PLATE, STORAGE MEDIUM, AND METHOD FOR FABRICATING THE MASTER PLATE, STAMPER PLATE AND STORAGE MEDIUM**
MUTTERPLATTE ZUR HERSTELLUNG EINER MATRIZE, MATRIZE, SPEICHERMEDIUM, UND VERFAHREN ZUR HERSTELLUNG DER MUTTERPLATTE, DER MATRIZE UND DES SPEICHERMEDIUMS
PLAQUE DE FABRICATION DE MATRICE DE PRESSAGE, MATRICE DE PRESSAGE, SUPPORT DE STOCKAGE ET PROCEDE DE FABRICATION DE MATRICE DE PRESSAGE, MATRICE DE PRESSAGE ET SUPPORT DE STOCKAGE

(30) Priority: 28.10.2002 NL 1021760
(43) Date of publication of application: 03.08.2005
(73) Proprietor: Singulus Mastering B.V., 5657 EN Eindhoven (NL)
(72) Inventor: TACKEN, Roland, Anthony, NL-5642 AK Eindhoven (NL); VAN DER VEER, Mark, Eduard, Julian, NL-5467 DB Veghel (NL); CUSTERS, Rolf, Hendrikus, Jacobus, NL-6002 TL Weert (NL)
(74) Representative: Vossius & Partner
(86) International application number: PCT/NL2003/000732
(87) International publication number: WO 2004/038714

(56) References cited:
- EP-A- 0 346 650
- WO-A-02/09103
- PATENT ABSTRACTS OF JAPAN vol. 010, no. 358 (P-522), 2 December 1986 (1986-12-02) -& JP 61 153850 A (MATSUSHITA ELECTRIC IND CO LTD), 12 July 1986 (1986-07-12)
- PATENT ABSTRACTS OF JAPAN vol. 016, no. 046 (P-1307), 5 February 1992 (1992-02-05) & JP 03 248342 A (NEC CORP), 6 November 1991 (1991-11-06)

## Description

This invention relates to a master plate for fabricating a stamper plate for production of an optical storage medium with information such as a CD or a DVD, the master plate comprising a substrate and a photoresist layer applied thereto, while parts of the photoresist layer exposed to light of a predetermined frequency are soluble in a solvent.

The invention further relates to a stamper plate for the production of an optical storage medium with information, and to the optical storage medium as such.

In addition, the invention relates to a method for fabricating a master plate for fabricating a stamper plate, wherein a photoresist layer is applied to a substrate, while parts of the photoresist layer exposed to light of a predetermined frequency are soluble in a solvent.

Furthermore, the invention relates to a method for fabricating a stamper plate and an optical storage medium.

Such master plate and such method are known from practice. For the fabrication of the known master plate according to the known method, first an adhesive such as n-(2-amino-ethyl)-3-aminopropyl-trimethoxysilane is applied to the substrate. Next, the adhesive is rinsed with a rinsing agent such as water. This rinsing period is some 30 seconds. According to the prior art, the adhesive layer is applied as thinly as possible, on the assumption that this is required to accomplish a firm adhesion to the photoresist layer to be subsequently applied. By rinsing, the excess adhesive is removed, the intention being to realize an adhesive layer of just a few nanometers (monolayer) on the substrate. Next, the photoresist layer is applied onto the adhesive layer. After this, it is possible to expose parts of the photoresist layer according to a predetermined pattern to light of the predetermined frequency. As a result, the solubility of the exposed parts in the solvent increases strongly. By rinsing the photoresist layer with the solvent, the exposed parts of the photoresist layer are removed. This yields a relief pattern such as a hole pattern in the photoresist layer, this relief pattern corresponding, for instance, to digital information to be subsequently transferred to an optical medium via a stamper plate manufactured with the master plate. Finally, the surface of the photoresist layer of the master plate can be provided with a relatively thin metal layer by which the surface is rendered conductive. In this connection, it is noted that relatively thin is understood to mean that the relief pattern preserves the digital information.

The master plate can be used for fabricating a so-called stamper plate. The metal layer applied to the master plate is, for instance, a nickel layer which makes it possible for the master plate to serve as a cathode in a galvanic process. In this process, a stamper plate is formed as a negative copy of the master plate by means of cathodic deposition of nickel in a box filled with nickel spheres which functions as an anode. Since the stamper plate is a negative copy of the master plate, the stamper plate has a relief pattern whose protrusions correspond to recesses of the relief pattern of the master plate. When the relief pattern of the master plate is a hole pattern, the relief pattern of the stamper plate is a pattern of posts which correspond to the holes of the hole pattern. The thus fabricated stamper plate can subsequently be used in an injection mold for the production of optical storage media with information, such as CDs or DVDs. The hole pattern is thereby transferred via the stamper plate to the optical storage media and comprises the information referred to.

WO-A-02/09103 describes a method for manufacturing a substrate for use in a stamper manufacturing process, a substrate which is used in a stamper manufacturing process and a method for manufacturing a stamper to be used in producing optical disks, comprising the exposing, developing and heating of a photosensitive film that has been coated onto a substrate.

In JP-A-61-153850, an original disk for optical disk and its manufacture is disclosed, wherein defects in molding due to the influence of a resin disturbance is reduced by laminating ≥2 kinds of photoresist which differ in sensitivity to laser light for exposure successively on a glass original disk by coating, and exposing the photoresist materials to the laser light and developing them.

A first aspect of the present invention is the recognition that a stamper plate manufactured with the known master plate is not self-clearing relative to optical media to be manufactured therewith. One of the causes of this is that in the manufacture of the known master plate the photoresist layer tends to lift from the substrate during rinsing with the solvent. Another cause is that the solvent etches away too much material of the photoresist layer, chiefly at the bottom of the holes near the substrate. The result is that the protrusions such as the above-mentioned posts of the stamper plate fabricated with the master plate have barbs. This has as a consequence that optical storage media manufactured with the stamper plate suffer from the phenomenon of "clouding", as will be elucidated in more detail hereinafter. Due to the stamper plate having protrusions with barbs, the polycarbonate material of the optical media will have difficulty coming off the stamper plate after injection molding. It is possible that as the media are pulled off the stamper plate, material of the optical media will be torn loose. This is the phenomenon of "clouding". A first consequence is that the fabricated media do not look esthetic, which makes the phenomenon of clouding visible. This is manifest in an annular pattern (which may or may not be local) on the mirroring surface of the master plate. A second consequence is that the stored information deforms or is actually lost.

It is a second aspect of the invention to provide a solution to the problem signaled above. In particular, it is an object of the invention to provide a master plate as defined in claim 1 whose relief pattern can yield a stamper plate which is self-clearing relative to optical media to be manufactured therewith. To this end, the invention provides a master plate characterized in that the solubility exhibits a trend along the normal to the photoresist layer, with the solubility on the side near the substrate being less than the solubility on the opposite, upper side of the photoresist layer. Accordingly, there is a gradient in the solubility of exposed parts of the photoresist layer. This means that upon rinsing with the solvent, exposed parts at the upper side of the photoresist layer are dissolved relatively fast and rinsed off, after which exposed parts of the photoresist layer near the substrate are dissolved relatively slowly and rinsed off. The result is that the bottom of each of the recesses or holes of the relief pattern obtains a flowing contour. As a result, the protrusions (posts) of the stamper plate corresponding to the recesses (holes) are substantially free from barbs. This means that the production of the optical media can take place without entailing appreciable clouding.

Exposing parts of the photoresist layer can be done using laser light of a frequency in the frequency band of 200-500 nm. Further, the solvent can be an alkaline solvent.

The method according to the invention is defined in claim 4.

This method can be carried out, for instance, by providing an adhesive layer of an adhesive such as n-(2-amino-ethyl)-3-aminopropyltrimethoxysilane directly on the substrate, after which a photoresist layer is provided on the adhesive layer. Optionally, between applying the adhesive layer and the subsequent application of the photoresist layer, rinsing is done with a rinsing agent such as water for a short time of, for instance, 5 seconds. Preferably, however, rinsing is not done at all. As a consequence, the adhesive layer applied according to the invention is relatively thick. The thickness of the adhesive layer can be, for instance, 30-40 nanometers. The photoresist layer applied to the relatively thick adhesive layer appears to enter into a crosslinking reaction with the adhesive of the relatively thick adhesive layer, whereby molecules of the adhesive diffuse into the photoresist layer. Through the crosslinking reaction, the adhesive layer turns into a subphotoresist layer, exposed parts of which have a relatively low solubility in the solvent. The new subphotoresist layer can be formed from the adhesive layer owing to the adhesive layer being relatively thick. Thus, with this method, a master plate can be manufactured, in which on the substrate of the master plate a first subphotoresist layer having a first solubility in the solvent after exposure has been formed, and in which on the first subphotoresist layer there is a second subphotoresist layer having a second solubility. What applies here is that the first solubility is less than the second solubility. It has also been found that the subphotoresist layers have obtained a firm bond with each other and the substrate.

According to the prior art, a relatively long rinsing period for rinsing of the adhesive is required for obtaining a relatively thin adhesive layer for a proper bonding to the photoresist layer to be subsequently applied. According to the invention, however, omitting this rinsing step has been found to yield a particularly effective and simple method for fabricating a self-clearing master plate, while further an adequate bonding of the photoresist layer is achieved.

The invention will presently be elucidated in more detail with reference to the drawing, in which:
Figs. 1a-1d schematically illustrate the method for manufacturing a master plate;
Fig. 2a schematically represents the fabrication of a stamper plate using the master plate according to Fig. 1d;
Fig. 2b schematically represents the production of an optical storage medium with information, such as a CD, using a stamper plate included in an injection molding machine;
Fig. 3a schematically shows a part of a master plate according to the prior art with a hole of a hole pattern;
Fig. 3b shows a part of a first master plate with a hole (recess) of a hole pattern (relief pattern), where the master plate comprises a fully cured first subphotoresist layer and, provided thereon, a second subphotoresist layer;
Fig. 3c shows a part of a second master plate according to the invention with a hole (recess) of a hole pattern (relief pattern), where the master plate comprises a first subphotoresist layer of a first solubility after exposure and a second subphotoresist layer of a second solubility after exposure, the second solubility being greater than the first solubility;
Fig. 4 schematically illustrates in what way an adhesive layer applied to a substrate enters into a crosslinking reaction with a photoresist layer applied onto the adhesive layer.

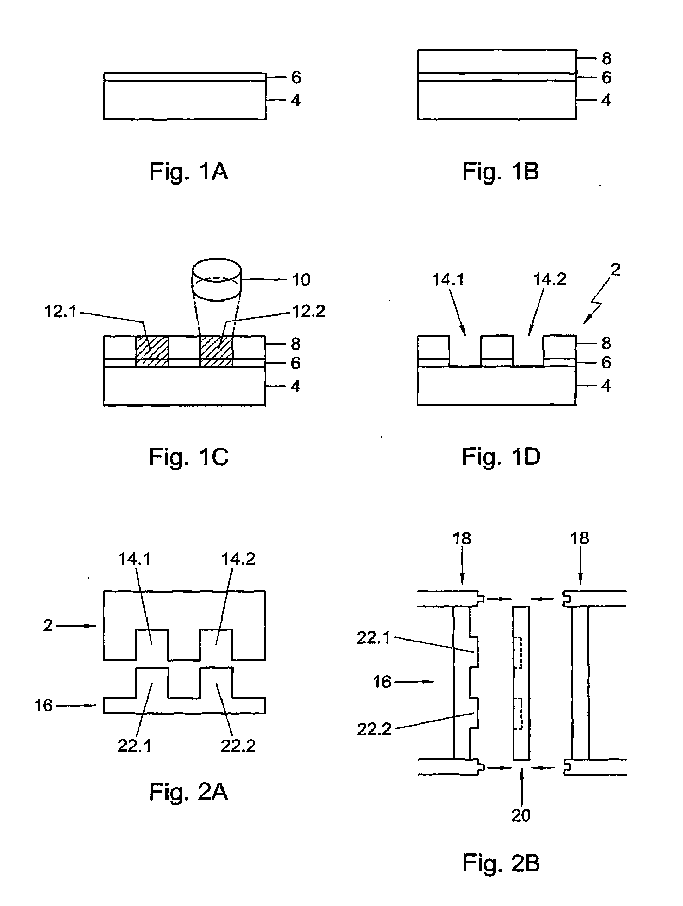

For manufacturing a master plate 2, an adhesive is applied to a substrate 4. This adhesive forms an adhesive layer 6 on the substrate. Optionally, a part of the adhesive is removed with a rinsing agent such as water, whereby an adhesive layer 6 of a particular thickness is realized. Next, a photoresist layer 8 is applied onto the adhesive layer 6. This photoresist layer 8 can be exposed with the aid of a laser 10. The frequency of the laser light can be in a band of 200-500 nanometers. As a result of the exposure, exposed parts 12.1 and 12.2 are formed in the photoresist layer 8. These exposed parts have a greater solubility in an alkaline solvent (such as sodium hydroxide solution) than the non-exposed parts of the photoresist layer 8. When the photoresist layer 8 according to Fig. 1c is rinsed with the alkaline solvent, a relief pattern is formed, such as a hole pattern with recesses such as holes 14.1 and 14.2 in the photoresist layer (as shown in Fig. 1d). Thus, a predetermined hole pattern can be created in the photoresist layer 8. The hole pattern represents particular digital information. When the photoresist layer 8 is provided with the hole pattern, the substrate with the photoresist layer can serve as master plate 2. Preferably, the surface of the photoresist layer of the master plate 2 is further provided with a relatively thin metal layer (not shown in the drawing). Thus, the master plate can serve as a cathode in a galvanic production process of a stamper plate, as will be elucidated in more detail hereinafter.

With the master plate 2, by a known galvanic process, a stamper plate 16 can be fabricated (Fig. 2a). The stamper plate 16 is a negative copy of the master plate 2. With the aid of the stamper plate 16, subsequently an optical storage medium 20 with information such as a CD or DVD can be produced by an injection molding process in an injection molding machine 18 (Fig. 2b). In this process, with the posts 22.1 and 22.2, which correspond to the holes 14.1 and 14.2, an impression is made in the CD to be formed. The impression thus made corresponds to the hole pattern in the master plate 2 and comprises the transferred digital information.

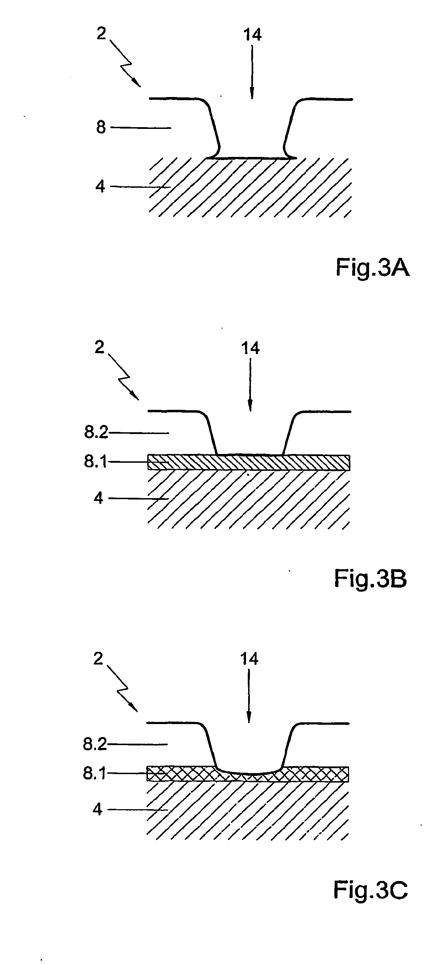

Fig. 3a shows a master plate according to the prior art, which consists of a substrate 4 and a photoresist layer 8 provided thereon. In the photoresist layer, a hole 14 of a hole pattern is provided, it being clear to see that the hole will not yield a stamper plate with posts having a self-clearing capacity. As a result, in the production of the stamper plate, barbs will form on the stamper plate post 22 corresponding to the hole 14. These barbs will be present at the top of the post 22. In the production (Fig. 2b) of the CD, these barbs will result in damages (resulting in the phenomenon of clouding) of the polycarbonate material of the optical medium 20 during the release of the optical medium 20 from the stamper plate 16.

Fig. 3b is useful for understanding the concept of the invention and shows a first master plate 2 which comprises a first subphotoresist layer 8.1 and, provided thereon, a second subphotoresist layer 8.2. In this case, the first subphotoresist layer is fully cured, so that the solubility of exposed parts of this subphotoresist layer 8.1 is very minor. The exposed parts of the second subphotoresist layer 8.2, however, are relatively well soluble in the solvent. The hole 14 of the master plate 2 according to Fig. 3b has a self-clearing capacity that is greater than the self-clearing capacity of the hole 14 of the master plate 2 according to Fig. 3a.

Fig. 3c shows a master plate which comprises two subphotoresist layers 8.1 and 8.2. The exposed parts of the subphotoresist layer 8.1 have a first solubility and the exposed parts of the subphotoresist layer 8.2 have a second solubility in the alkaline solvent. The second solubility is greater than the first solubility. Upon etching (rinsing with the solvent), this results in the shape of the hole 14 of the hole pattern as outlined in Fig. 3c. The shape of the hole pattern represented here has been found to have the best self-clearing capacity in practice. As a consequence, the master plate according to Fig. 3c is eminently suitable to be used for the fabrication of stamper plates 16, such stamper plates 16 being virtually entirely free from barbs on the posts 22. In practice, optical storage media such as CDs and DVDs formed with such stamper plates prove to be substantially free from the phenomenon of clouding. Further, this yields particularly esthetic optical media.

The depth of the hole 14 in the master plate according to Figs. 3b and 3c is virtually equal to the thickness of the second subphotoresist layer 8.2. As a rule, this depth is about 150 nanometers when the master plate is intended for the production of a stamper plate for CDs and 130 nanometers when the master plate is intended for the fabrication of a stamper plate for the production of DVDs. The thickness of the first subphotoresist layer can be, for instance, 30 nanometers.

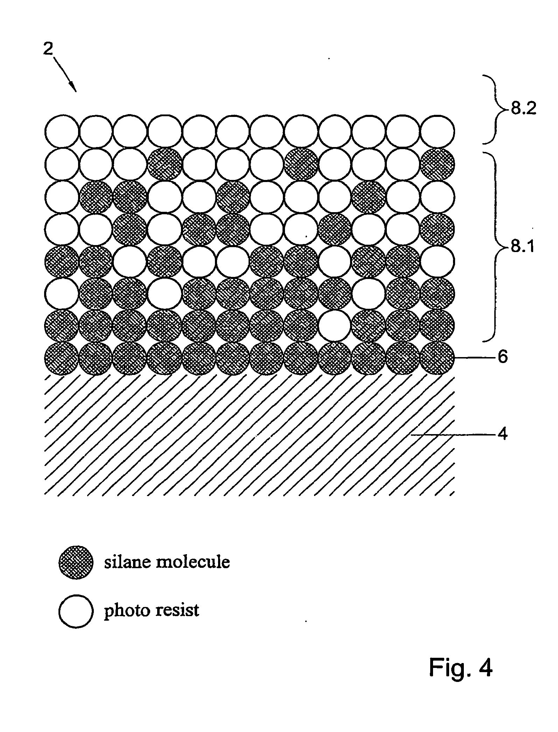

One possible way of manufacturing the master plate 2 according to the invention is the following. On a substrate 4 of, for instance, glass, an adhesive such as n-(2-amino-ethyl)-3-aminopropyl-trimethoxysilane, hexamethyldisilazane (HMDS), or trimethylsilyldiethylamine (TMSDEA) is provided. Optionally, for a short time (for instance 5 seconds), rinsing is done with a rinsing agent such as water. Since rinsing is omitted entirely or done for just a short time, a relatively thick adhesive layer of 30-40 nm is formed on the substrate 4. After this, a photoresist layer is applied onto the adhesive layer. This photoresist layer can be an ordinary photoresist layer. Then, a crosslinking reaction starts between the adhesive and the photoresist layer. After this reaction has taken place, the situation as schematically represented in Fig. 4 arises. On the substrate 4, an adhesive layer 6 of just a few nanometers (monolayer) has formed. Immediately above this layer, as a result of the crosslinking reaction, a (new) first subphotoresist layer 8.1 has formed, exposed parts of which have a first solubility in the alkaline solvent. Above the first subphotoresist layer, a second subphotoresist layer 8.2 has formed (this second subphotoresist layer 8.2 has the same composition as the initially applied photoresist layer, since this layer has not entered into any reaction with the adhesive). The exposed parts of the second subphotoresist layer 8.2 have a second solubility in the alkaline solvent which is greater than the first solubility. As a result, holes created in the master plate 2 will have a self-clearing profile.

The preceding paragraph shows that by omitting the rinsing of the applied adhesive, in a simple manner a master plate 2 can be fabricated in which the created holes 14 will have a self-clearing profile. Also, the bonding of the subphotoresist layers to the substrate 4 proves to be sufficiently strong. This means that in order to obtain a firm bonding, it is not necessary for the applied adhesive layer to be rinsed intensively with a rinsing agent such as water directly after application onto the substrate.

According to an alternative method, the master plate according to the invention can be obtained by applying a first subphotoresist layer 8.1 onto a substrate 4 in a first step, which layer 8.1 is subsequently cured with a curing treatment. As a result of the curing treatment, the solubility of parts after exposure is reduced definitively. This curing treatment can consist in the complete exposure of the subphotoresist layer 8.1 to a UV light beam. Normally, the frequency of the light of this UV light beam will be different than the frequency of the light of the light beam used for exposing parts of a photoresist layer for increasing the solubility in the solvent (exposure for the purpose of etching). By choosing the frequency and the exposure time of the light for the curing treatment, the first solubility of the first photosensitive resist layer can be regulated. A different curing treatment may consist in subjecting the first subphotoresist layer 8.1 to a heat treatment.

After the curing treatment has taken place, in a second step, on the first subphotoresist layer, a second subphotoresist layer can be applied. Thus, a master plate is obtained which comprises two subphotoresist layers, of which exposed parts (for the purpose of etching) have different solubilities in the alkaline solvent.

The invention has been discussed on the basis of a few exemplary embodiments, but is not in any way limited to these exemplary embodiments. Diverse variations and modifications also falling within the scope of the invention are conceivable. Of importance is that there be a gradient of solubility of exposed parts of the photosensitive resist layer (or of the photosensitive resist layers) that is perpendicular to the plane of the substrate 4. In this way, upon exposure and etching, a relief pattern with, for instance, grooves, pits, holes and/or other recesses is obtained, in which the recesses are self-clearing. It is possible to provide the master plate according to the invention with many different photoresist layers having different solubilities of exposed parts. Also, it is possible to achieve a particular gradient in solubility by utilizing, in the application of the photoresist layer, a first material with a first solubility after exposure (with a first concentration of photo initiator) and a second material with a second solubility after exposure (with a second concentration of photo initiator other than the first concentration). In addition, the solubility of a (first) applied layer can be definitively reduced by, for instance, brief rinsing with a developer ("pre-dip" treatment).

## Claims

1. A master plate (2) for fabricating a stamper plate (16) for production of an optical storage medium with information such as a CD or a DVD, the master plate (2) comprising a substrate (4), an adhesive layer (6) and a single photoresist layer (8) provided thereon, while parts of the photoresist layer (8) exposed to light of a predetermined frequency are soluble in a solvent for creating a hole pattern in the photoresist layer (8), wherein the solubility exhibits a gradient along the normal to the photoresist layer (8) by diffusion of molecules of the adhesive into the photoresist layer (8), the solubility on the side near the substrate (4) being less than the solubility on the opposite, upper side of the photoresist layer (8).

2. A master plate according to claim 1, wherein parts of the photoresist layer (8) exposed to laser light having a wavelength of 200-500 nm are soluble in the solvent.

3. A master plate according to any one of the preceding claims, wherein the solvent is an alkaline solvent.

4. A method for fabricating a master plate (2) for fabricating a stamper plate (16), wherein on a substrate (4) an adhesive layer (6) and a single photoresist layer (8) is provided, wherein parts of the photoresist layer (8) exposed to light of a predetermined frequency are soluble in a solvent for creating a hole pattern in the photoresist layer (8), wherein the solubility exhibits a gradient along the normal to the photoresist layer (8) by diffusion of molecules of the adhesive into the photoresist layer (8), the solubility on the side near the substrate (4) being less than the solubility on the opposite, upper side of the photoresist layer (8).

5. A method according to claim 4, **characterized in that** the method further comprises the following steps:
• providing directly on the substrate (4) the adhesive (6) n-(2-aminoethyl)-3-aminopropyl-trimethoxysilane, hexamethyldisilazane (HMDS) and/or trimethylsilyldiethylamine (TMSDEA);
• providing the photoresist layer (8) on the adhesive (6) applied;
• allowing formation, through a crosslinking reaction between the adhesive (6) and the photoresist layer (8) provided directly thereon.

6. A method according to claim 5, wherein the adhesive (6), directly upon application, is rinsed with a rinsing agent such as water for a relatively short period of time.

7. A method according to claim 6, wherein the relatively short rinsing period with water takes 5 seconds at a maximum.

8. A method according to any one of claims 4 to 7, wherein the photoresist layer (8) is exposed according to a predetermined pattern, after which the thus exposed parts are dissolved in the solvent and are rinsed off, and after which the surface of the photoresist layer (8) of the master plate (2) is provided with a relatively thin metal layer.

9. A method according to any one of claims 4 to 8, wherein the method further comprises the step of fabricating a stamper plate (16) by a galvanic process as a negative copy of the master plate (2).

10. A method according to claim 9, wherein the method further comprises the step of fabricating an optical storage medium (20) by an injection molding process with the stamper plate (16).

## Patentansprüche

1. Mutterplatte (2) zum Herstellen einer Matrize (16) zum Herstellen eines optischen Speichermediums mit Informationen, wie eine CD oder eine DVD, wobei auf der Mutterplatte (2) ein Substrat (4), eine Klebstoffschicht (6) und eine einzelne Photoresistschicht (8) vorgesehen ist, wobei Teile der Photoresistschicht (8), die Licht mit vorgegebener Frequenz ausgesetzt sind, in einem Lösungsmittel löslich sind, um in der Photoresistschicht (8) ein Lochmuster auszubilden, wobei die Löslichkeit einen Gradienten entlang der Senkrechten zur Photoresistschicht (8) durch Diffusion von Molekülen des Klebstoffs in die Photoresistschicht (8) zeigt, und wobei die Löslichkeit auf der Seite nahe dem Substrat (4) geringer ist als die Löslichkeit auf der gegenüber liegenden Oberseite der Photoresistschicht (8).

2. Mutterplatte nach Anspruch 1, wobei Teile der Photoresistschicht (8), die Laserlicht mit einer Wellenlänge von 200 bis 500 nm ausgesetzt ist, in dem Lösungsmittel löslich sind.

3. Mutterplatte nach einem der vorstehenden Ansprüche, wobei das Lösungsmittel ein Alkali-Lösungsmittel ist.

4. Verfahren zum Herstellen einer Mutterplatte (2) zum Herstellen einer Matrize (16), wobei auf einem Substrat (4) eine Klebstoffschicht (6) und eine einzelne Photoresistschicht (8) vorgesehen sind, wobei Teile der Photoresistschicht (8), die Licht mit einer vorgegebenen Frequenz ausgesetzt ist, in einem Lösungsmittel löslich sind, um ein Lochmuster in der Photoresistschicht (8) auszubilden, wobei die Löslichkeit einen Gradienten entlang der Senkrechten zur Photoresistschicht (8) durch Diffusion von Molekülen des Klebstoffs in die Photoresistschicht (8) zeigt, und wobei die Löslichkeit auf der Seite nahe dem Substrat (4) geringer ist als die Löslichkeit auf der gegenüber liegenden Oberseite der Photoresistschicht (8).

5. Verfahren nach Anspruch 4, **dadurch gekennzeichnet, dass** das Verfahren ferner die folgenden Schritte aufweist:
- Vorsehen des Klebstoffs (6) n-(2-Aminoethyl)-3-Aminopropyl-Trimethoxysilan, Hexamethyldisilazan (HMDS) und/oder Trimethylsilyldiethylamin (TMSDEA) direkt auf dem Substrat (4);
- Ausbilden der Photoresistschicht (8) auf dem aufgebrachten Klebstoff (6);
- Formierung durch Vernetzungsreaktion zwischen dem Klebstoff (6) und der direkt darauf aufgebrachten Photoresistschicht (8).

6. Verfahren nach Anspruch 5, wobei der Klebstoff (6) direkt bei Auftrag mit einem Spülmittel, wie Wasser, während eines relativ kurzen Zeitraums bespült wird.

7. Verfahren nach Anspruch 6, wobei der relativ kurze Spülzeitraum mit Wasser maximal 5 Sekunden beträgt.

8. Verfahren nach einem der Ansprüche 4 bis 7, wobei die Photoresistschicht (8) entsprechend einem vorgegebenem Muster belichtet wird, woraufhin die so belichteten Teile in dem Lösungsmittel gelöst und weggespült werden und danach die Oberfläche der Photoresistschicht (8) der Mutterplatte (2) mit einer relativ dünnen Metallschicht versehen wird.

9. Verfahren nach einem der Ansprüche 4 bis 8, wobei das Verfahren den Schritt zum Herstellen einer Matrize (16) durch einen galvanischen Prozess als eine Negativkopie der Mutterplatte (2) aufweist.

10. Verfahren nach Anspruch 9, wobei das Verfahren ferner den Schritt zum Herstellen eines optischen Speichermediums (20) durch ein Spritzgießverfahren mit der Matrize (16) aufweist.

## Revendications

1. Plaque maître (2) pour fabriquer une matrice de pressage (16) pour la production d'un support de stockage optique contenant des informations, tel qu'un CD ou DVD, la plaque maître (2) comprenant un substrat (4) sur lequel une couche adhésive (6) et une unique couche de réserve photosensible (8) sont placées, tandis que des parties de la couche de réserve photosensible (8) exposées à une lumière de fréquence prédéterminée sont solubles dans un solvant pour créer un motif en forme de trou dans la couche de réserve photosensible (8), dans lequel la solubilité présente un gradient le long de la normale de la couche de réserve photosensible (8) par la diffusion de molécules de l'adhésif dans la couche de réserve photosensible (8), la solubilité du côté proche du substrat (4) étant inférieure à la solubilité du côté supérieur opposé de la couche de réserve photosensible (8).

2. Plaque maître selon la revendication 1, dans laquelle les parties de la couche de réserve photosensible (8) exposées à une lumière laser ayant une longueur d'onde de 200 nm à 500 nm sont solubles dans le solvant.

3. Plaque maître selon l'une quelconque des revendications précédentes, dans laquelle le solvant est un solvant alcalin.

4. Procédé de fabrication d'une plaque maître (2) pour fabriquer une matrice de pressage (16), dans lequel une couche adhésive (6) et une unique couche de réserve photosensible (8) sont placées sur un substrat (4), dans lequel des parties de la couche de réserve photosensible (8) exposées à une lumière de fréquence prédéterminée sont solubles dans un solvant pour créer un motif en forme de trou dans la couche de réserve photosensible (8), dans lequel la solubilité présente un gradient le long de la normale de la couche de réserve photosensible (8) par la diffusion de molécules de l'adhésif dans la couche de réserve photosensible (8), la solubilité du côté proche du substrat (4) étant inférieure à la solubilité du côté supérieur opposé de la couche de réserve photosensible (8).

5. Procédé selon la revendication 4, **caractérisé en ce que** le procédé comprend en outre les étapes suivantes :
- le placement direct sur le substrat (4) de l'adhésif (6), le N-(2-aminoéthyl)-3-aminopropyl-triméthoxysilane, l'hexaméthyl-disilazane (HMDS) et/ou la triméthylsilyl-diéthylamine (TMSDEA) ;
- le placement de la couche de réserve photosensible (8) sur l'adhésif (6) appliqué ;
- le fait de permettre une formation par une réaction de réticulation entre l'adhésif (6) et la couche de réserve photosensible (8) placée directement dessus.

6. Procédé selon la revendication 5, dans lequel l'adhésif (6), directement lors de l'application, est éliminé par rinçage avec un agent de rinçage tel que l'eau pendant une période de temps relativement courte.

7. Procédé selon la revendication 6, dans lequel la période de rinçage relativement courte avec de l'eau prend 5 secondes au maximum.

8. Procédé selon l'une quelconque des revendications 4 à 7, dans lequel la couche de réserve photosensible (8) est exposée selon un motif prédéterminé, après quoi les parties ainsi exposées sont dissoutes dans le solvant et sont éliminées par rinçage, et après quoi la surface de la couche de réserve photosensible (8) de la plaque maître (2) est pourvue d'une couche métallique relativement fine.

9. Procédé selon l'une quelconque des revendications 4 à 8, dans lequel le procédé comprend en outre l'étape de fabrication d'une matrice de pressage (16) par un procédé galvanique sous la forme d'une copie négative de la plaque maître (2).

10. Procédé selon la revendication 9, dans lequel le procédé comprend en outre l'étape de fabrication d'un support de stockage optique (20) par un procédé de moulage par injection avec la matrice de pressage (16).
